# EUROPÄISCHE PATENTSCHRIFT

(11) **EP 2 538 507 B1**
(45) Veröffentlichungstag und Bekanntmachung des Hinweises auf die Patenterteilung: **02.03.2016**
(21) Anmeldenummer: 12004360.9
(22) Anmeldetag: 08.06.2012
(51) Int. Cl.: H02B 1/21

(54) **Sammelschienenadapter**
Busbar adapter
Adaptateur de barre collectrice

(30) Priorität: 20.06.2011 DE 102011105373
(43) Veröffentlichungstag der Anmeldung: 26.12.2012
(73) Patentinhaber: RITTAL GmbH & Co. KG, 35745 Herborn (DE)
(72) Erfinder: Wagener, Hans, 35716 Dietzhölztal (DE)
(74) Vertreter: Angerhausen, Christoph

(56) Entgegenhaltungen:
- WO-A1-2004/088808
- WO-A1-2008/037229

## Beschreibung

Die Erfindung betrifft einen Sammelschienenadapter mit mindestens einem Hakenteil, das darauf ausgelegt ist, eine Sammelschiene zu hintergreifen und einen Freiraum abzugrenzen, der in einer Raumrichtung eine Abmessung der Sammelschiene aufweist, wobei das Hakenteil ein Fußteil umfasst, das eine erste und eine zweite Stützfläche aufweist, und wobei das Fußteil wahlweise derart ausrichtbar ist, dass in der Raumrichtung, in welcher das Hakenteil einen Freiraum abgrenzt, der einer Abmessung der Sammelschiene entspricht, entweder die erste oder die zweite Stützfläche des Fußteils den Freiraum abgrenzt. Ein derartiger Sammelschienenadapter ist aus der WO 2004/088808 A1 und aus der WO2008/037229 A1 bekannt.

Die WO 2004/088808 A1 offenbart eine Adaptervorrichtung zum Anbringen an einem Hakenteil eines Sammelschienenadapters, die einen Ausgleichsbereich aufweist. Die Adaptervorrichtung umfasst mindestens zwei Kontaktbereiche für einen Kontakt mit einer Kontaktvorrichtung des Hakenteils einerseits und einer Sammelschiene andererseits, wobei die mindestens zwei Kontaktbereiche leitend miteinander verbunden sind.

Schließlich beschreibt die WO 2008/037229 A1 ein Haktenteil für einen Sammelschienenadapter, bei dem ein Distanzstück zur Anpassung eines Abstandes an die Dicke einer Stromsammelschiene vorgesehen ist. Das Distanzstück ist an dem Haktenteil um eine Drehachse drehbar angebracht und weist zur Anlage an einer Stromsammelschiene wenigstens einen konvex gestalteten Bereich auf.

Ein weiterer gattungsgemäßer Adapter für ein Sammelschienensystem ist aus der EP 0 762 582 A1 bekannt. Bei dem darin beschriebenen Sammelschienenadapter sind die Hakenteile als separate Aufsteckfüße ausgebildet, welche mit Hilfe von Arretierungen an einer den Sammelschienen zugewandten Seiten des Adapters wahlweise befestigt werden können. Um den Sammelschienenadapter an die Dicke der vorhandenen Sammelschiene anzupassen, muss folglich der gesamte Aufsteckfuß ausgetauscht werden, wozu auch die Arretierung zuerst gelöst und nach dem Einsetzen des passenden Aufsteckfußes zur Fixierung dieses wieder in den Sammelschienenadapter eingesetzt werden muss.

Noch einen weiteren Sammelschienenadapter beschreibt die DE 10 2007 061 430 B3. Bei diesem Adapter weisen die Hakenteile zur Anpassung an eine gewünschte Sammelschienendicke ausbrechbare Kanten auf, weshalb die Erweiterung des von dem Hakenteil abgegrenzten Freiraums zwecks Aufnahme einer dickeren Sammelschiene ein irreversibler Vorgang ist und somit das entsprechende Hakenteil nach dem Ausbrechen der Stützkante nicht mehr zur Aufnahme einer Sammelschiene mit geringerer Dicke verwendet werden kann.

Bei dem Sammelschienenadapter gemäß der DE 203 05 507 U1 sind Halteabsätze vorgesehen, welche wahlweise in den von dem Hakenteil abgegrenzten Freiraum eingesetzt werden können, um diesen an die Dicke einer vorhandenen Sammelschiene anzupassen.

Die DE 198 36 383 C1 beschreibt einen gattungsgemäßen Sammelschienenadapter, bei dem ein Klemmbügel zur klemmenden Aufnahme einer Sammelschiene vorgesehen ist, wobei jeder Klemmbügel ein im wesentlichen L-förmiges Klemmteil und einen an diesem verstellbar angelenkten Schwenkbügel aufweist. Weiterhin ist die Schenkellänge des verstellbaren Schwenkbügels gegenüber der Schenkellänge des Klemmteils unterschiedlich dimensioniert. Die vorbeschriebenen aus dem Stand der Technik bekannten Lösungen zur Anpassung des von einem Hakenteil zwecks Aufnahme einer Sammelschiene gebildeten Freiraums haben den Nachteil, entweder technisch aufwändig realisiert zu sein, keine reversible Anpassung des Freiraums zu bieten, oder für die Anpassung des Freiraums einen technisch mehr oder weniger komplizierten Arbeitsschritt zu erfordern.

Es ist daher die Aufgabe der Erfindung, einen gattungsgemäßen Sammelschienenadapter vorzuschlagen, der mit einfachen technischen Mitteln realisiert ist, eine reversible Anpassung des von dem Hakenteil für die Aufnahme einer Sammelschiene ausgebildeten Freiraums ermöglicht und bei dem die Anpassung des Freiraums im Zuge einfacher Arbeitsschritte ermöglicht ist.

Diese Aufgabe löst der Sammelschienenadapter gemäß Anspruch 1. Die abhängigen Ansprüche beschreiben vorteilhafte Ausführungsformen der Erfindung.

Der erfindungsgemäße Sammelschienenadapter zeichnet sich dadurch aus, dass das Fußteil als ein separates Bauteil ausgebildet ist, das über ein lösbares Befestigungsmittel mit dem Sammelschienenadapter verbunden ist, wobei das Befestigungsmittel zu der ersten Stützfläche einen ersten Abstand aufweist, der von einem zweiten Abstand, welchen das Befestigungsmittel zu der zweiten Stützfläche aufweist, abweicht. Mit anderen Worten ist das Befestigungsmittel in Bezug auf die beiden Stützflächen des Fußteils dezentriert angeordnet, so dass je nach dem in welcher Position das Fußteil an dem Hakenteil bzw. dem Sammelschienenadapter befestigt ist, entweder die eine oder die andere der beiden Stützflächen zur Abgrenzung des Freiraums dient, wobei dann die Abmessung des Freiraums in der Raumrichtung senkrecht zu den Stützflächen davon abhängt, welche der beiden Stützflächen die Abgrenzung des Freiraums bereitstellt.

Die Abmessung des Freiraums in der genannten Raumrichtung, welche einer Abmessung der Sammelschiene entspricht, wird somit in Abhängigkeit davon ausgewählt, welche der beiden Stützflächen die Begrenzung des von dem Hakenteil abgegrenzten Freiraums ausbildet.

Vorzugsweise weist das Fußteil einen im Wesentlichen quaderförmigen Körper auf, bei dem die Stützflächen an gegenüberliegenden Seitenaußenflächen ausgebildet sind, so dass die Auswahl derjenigen Stützfläche, welche im Anwendungsfall die Abgrenzung des Freiraums realisieren soll, durch Rotation des Fußteils um 180° durchgeführt werden kann.

Besonders bevorzugt sind dazu die erste und die zweite Stützfläche als im Wesentlichen parallele Flächen ausgebildet und senkrecht zu der genannten Raumrichtung ausgerichtet, wobei die Stützflächen entlang der genannten Raumrichtung um einen Längenbetrag voneinander beabstandet sind, der der Summe aus den Abständen a und b des Befestigungsmittels zu der ersten und der zweiten Stützfläche entspricht.

Erfindungsgemäß soll das Befestigungsmittel auf keine bestimmten beschränkt sein, so lange ein solches dazu geeignet ist, das Fußteil wahlweise derart auszurichten, dass in der genannten Raumrichtung entweder die erste oder die zweite Stützfläche den Freiraum abgrenzt. Bevorzugt wird die Befestigung des Fußteils an dem Hakenteil bzw. an dem Sammelschienenadapter jedoch über einen Formschluss realisiert. Dazu kann das Befestigungsmittel entlang einer geraden Achse, die sich vorzugsweise parallel zu zumindest einer Stützfläche erstreckt, eine konstante Geometrie aufweisen, die gerade dazu ausgestaltet ist, einen Formschluss mit dem Sammelschienenadapter herzustellen. Dies kann beispielsweise eine Nut-Feder-Verbindung, eine Schwalbenschwanzverbindung oder dergleichen sein. Wesentlich ist jeweils, dass es sich um einen lösbaren Formschluss handelt, der in mindestens zwei Ausrichtungen des Fußteils in Bezug auf den Sammelschienenadapter bzw. das Hakenteil wahlweise hergestellt werden kann.

Für eine besonders stabile Verbindung des Fußteils mit dem Hakenteil bzw. mit dem Sammelschienenadapter ist vorgesehen, dass das Befestigungsmittel an einer Fläche des Fußteils vorliegt, die mit einer Fläche des Sammelschienenadapters bzw. des Hakenteils formschlüssig in Kontakt steht, wenn das Fußteil mittels des Befestigungsmittels mit dem Sammelschienenadapter bzw. dem Hakenteil verbunden ist, so dass sich die vorgenannten korrespondierenden Flächen von Fußteil und Sammelschienenadapter, welche formschlüssig miteinander in Kontakt stehen, gegeneinander abstützen.

Bei einer Ausführungsform der Erfindung ist für die elektrische Kontaktierung der Sammelschienen vorgesehen, dass das Hakenteil einer elektrisch leitenden Kontaktschiene beigeordnet ist, die von dem Fußteil überragt wird und die in eine Auflagefläche des Sammelschienenadapters eingelassen ist, wobei bei eingesetzter Sammelschiene die Sammelschiene zwischen einer Stützfläche des Fußteils und der Auflagefläche formschlüssig aufgenommen wird. Vorzugsweise fluchtet die Kontaktschiene mit der Auflagefläche, so dass einerseits die formschlüssige Aufnahme der Sammelschiene in dem Freiraum, andererseits jedoch eine zuverlässige elektrische Kontaktierung zwischen dem Sammelschienenadapter und der Sammelschiene gewährleistet wird. Bei einer Ausführungsform ist die Kontaktschiene jedoch zumindest abschnittsweise elastisch ausgebildet und ragt in den Freiraum hinein, wenn in ihn keine Sammelschiene eingesetzt ist, so dass die Kontaktschiene mit der Auflagefläche erst dann fluchtet, wenn eine Sammelschiene in den Freiraum eingesteckt und dabei die Kontaktschiene elastisch verformt wird.

Weitere Einzelheiten der Erfindung werden anhand der nachfolgenden Figuren beschrieben. Dabei zeigt:
- Figur 1: die Querschnittsansicht einer ersten Ausführungsform des erfindungsgemäßen Sammelschienenadapters, bei dem die Fußteile zur Aufnahme von Sammelschienen geringerer Dicke ausgerichtet sind;
- Figur 2: die Sammelschiene gemäß Figur 1, bei der die Fußteile für die Aufnahme von Sammelschienen mit einer größeren Dicke ausgerichtet sind; und
- Figuren 3A und 3B: Ausschnittsvergrößerungen der Hakenteile gemäß den Figuren 1 bzw. 2.

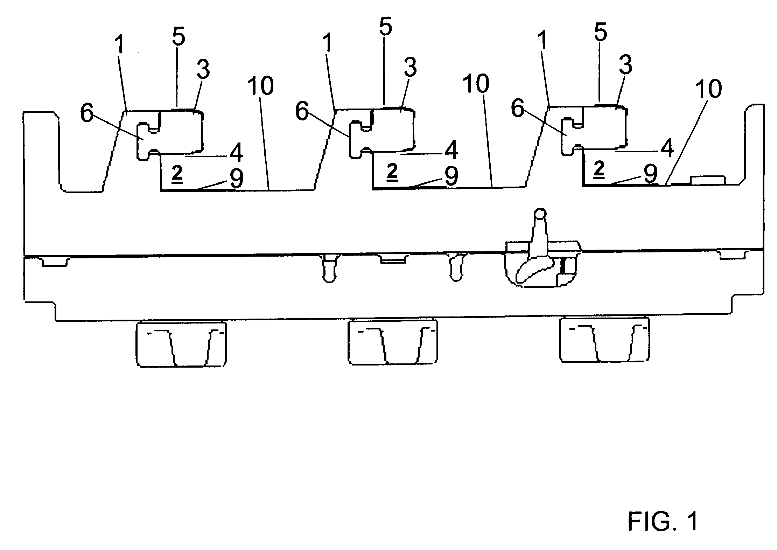

Figur 1 zeigt die Querschnittsansicht eines erfindungsgemäßen dreipoligen Sammelschienenadapters, welcher entsprechend über drei Hakenteile 1 verfügt, welche jeweils darauf ausgelegt sind, eine Sammelschiene zu hintergreifen und einen Freiraum 2 abzugrenzen. Es ist weiterhin zu erkennen, dass das Hakenteil 1 ein Fußteil 3 umfasst, das eine erste und eine zweite Stützfläche 4, 5 aufweist, wobei das Fußteil 3 in der Darstellung derart ausgerichtet ist, dass die erste Stützfläche 4 den Freiraum 2 in vertikaler Richtung zwischen sich und der Auflagefläche 10 abgrenzt. Weiterhin zu erkennen ist, dass das Befestigungsmittel 6 als eine T-förmige Feder einer Nut-Feder-Verbindung ausgestaltet ist, welche in eine entsprechende Nut, die von dem Hakenteil 1 bereitgestellt wird, in Richtung senkrecht zur Zeichnungsebene eingeschoben werden kann, so dass je nach Ausrichtung des Fußteils 3 beim Einschieben der Feder 6 in die Nut des Hakenteils entweder die erste Stützfläche 4 oder die zweite Stützfläche 5 in Richtung der Auflagefläche 10 des Sammelschienenadapters zwecks Abgrenzung des Freiraums zur Aufnahme der Sammelschiene orientiert ist.

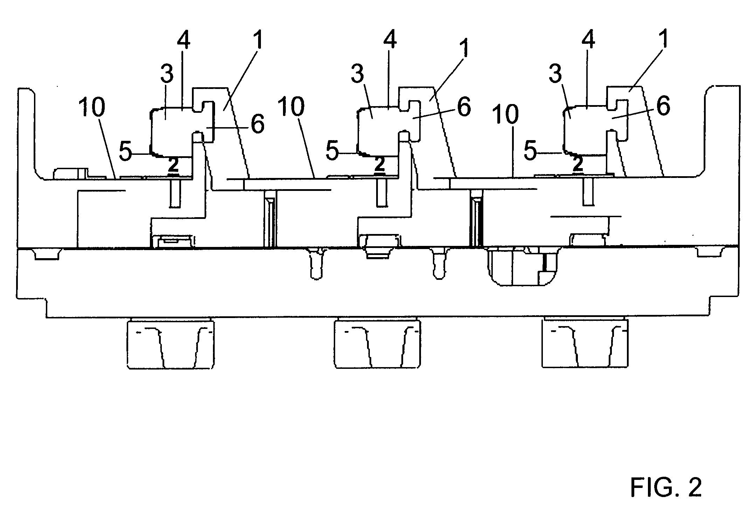

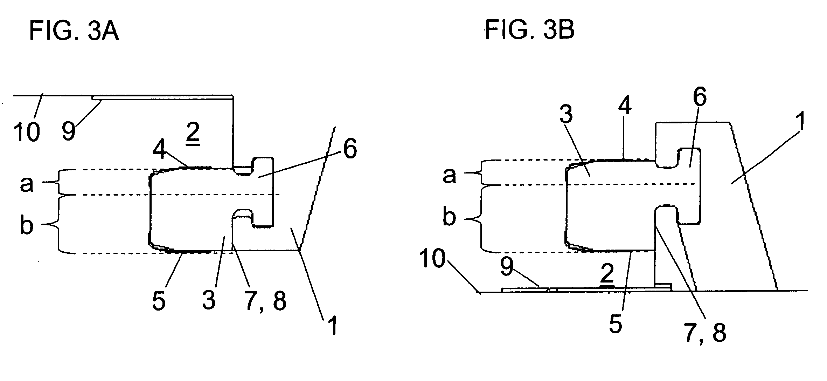

Figur 2 zeigt den Sammelschienenadapter gemäß Figur 1, wobei in der Darstellung die Fußteile 3 derart auf die Hakenteile 1 aufgeschoben sind, dass die zweite Stützfläche 5 in Richtung der Auflagefläche 10 orientiert ist. Durch die Zusammenschau der Figuren 1 und 2 mit den Figuren 3A und 3B wird deutlich, dass die Abmessung des Freiraums 2 in vertikaler Richtung in Abhängigkeit davon ausgeprägt ist, mit welcher Orientierung das Fußteil 3 auf das Hakenteil 1 aufgeschoben ist. Dies wird dadurch erreicht, dass der Abstand des Befestigungsmittels 6 zu der ersten Stützfläche 4 einen Abstand a aufweist, der von dem Abstand b des Befestigungsmittels 6 zu der zweiten Stützfläche 5 abweicht, wie es die Ausschnittsvergrößerungen gemäß den Figuren 3A und 3B verdeutlichen. Darüber hinaus zeigen die Figuren, dass bei der dargestellten Ausführungsform die erste und die zweite Stützfläche 4, 5 als parallele Flächen ausgebildet und senkrecht zu der Raumrichtung, in welcher sie den Freiraum 2 abgrenzen, ausgerichtet sind, wobei die Stützflächen 4, 5 entlang dieser Raumrichtung um einen Längenbetrag voneinander beabstandet sind, der der Summe aus den Abständen a und b entspricht.

In den Ausschnittsvergrößerungen der Figuren 3A und 3B ist weiterhin zu erkennen, dass das Hakenteil 1 einer elektrisch leitenden Kontaktschiene 9 beigeordnet ist, die von dem Fußteil 3 zumindest abschnittsweise überragt wird und die in eine Auflagefläche 10 des Sammelschienenadapters eingelassen ist. Vorzugsweise sind die Stützflächen 4, 5, die Auflagefläche 10 bzw. die Kontaktschiene 9 sowie das Hakenteil 1, soweit sie mit der aufzunehmenden Sammelschiene in Kontakt kommen, derart ausgeformt, dass die Sammelschiene in dem durch sie abgegrenzten Freiraum formschlüssig aufgenommen werden kann. Schließlich zeigen die Figuren, dass bei der dargestellten Ausführungsform das Befestigungsmittel 6 an einer Fläche 7 des Fußteils 3 angebracht ist, die mit einer korrespondierenden Fläche 8 des Sammelschienenadapters formschlüssig in Kontakt steht, wenn das Fußteil mittels des Befestigungsmittels 6 mit dem Sammelschienenadapter verbunden ist. Auf diese Weise wird erreicht, dass eine formschlüssige Verbindung des Fußteils 3 mit dem Hakenteil 1 ausreichend ist, um eine zuverlässige Fixierung des Sammelschienenadapters auf einer Sammelschiene zu gewährleisten.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung herangezogen werden.

### BEZUGSZEICHENLISTE

- 1: Hakenteil
- 2: Freiraum
- 3: Fußteil
- 4: erste Stützfläche
- 5: zweite Stützfläche
- 6: Befestigungsmittel
- 7: Fläche des Fußteils
- 8: Fläche des Sammelschienenadapters
- 9: Kontaktschiene
- 10: Auflagefläche

## Patentansprüche

1. Sammelschienenadapter, mit mindestens einem Hakenteil (1), das darauf ausgelegt ist, eine Sammelschiene zu hintergreifen und einen Freiraum (2) abzugrenzen, der in einer Raumrichtung eine Abmessung der Sammelschiene aufweist, wobei das Hakenteil (1) ein Fußteil umfasst, das eine erste und eine zweite Stützfläche (4, 5) aufweist, und wobei das Fußteil (3) wahlweise derart ausgerichtet ist, dass in der genannten Raumrichtung entweder die erste oder die zweite Stützfläche (4, 5) den Freiraum (2) abgrenzt, **dadurch gekennzeichnet,**
**dass** das Fußteil (3) ein separates Bauteil ist, das über ein lösbares Befestigungsmittel (6) mit dem Sammelschienenadapter verbunden ist, wobei das Befestigungsmittel (6) zu der ersten Stützfläche (4) einen ersten Abstand (a) aufweist, der von einem zweiten Abstand (b) des Befestigungsmittels (6) zu der zweiten Stützfläche (5) abweicht.

2. Sammelschienenadapter nach Anspruch 1, **dadurch gekennzeichnet, dass** das Fußteil (3) einen im Wesentlichen quaderförmigen Körper aufweist, bei dem die Stützflächen (4, 5) an gegenüberliegenden Seitenflächen ausgebildet sind.

3. Sammelschienenadapter nach Anspruch 1, **dadurch gekennzeichnet, dass** die erste und die zweite Stützfläche (4, 5) als parallele Flächen ausgebildet sind, die senkrecht zu der genannten Raumrichtung ausgerichtet und entlang der genannten Raumrichtung um einen Längenbetrag voneinander beabstandet sind, der der Summe aus den Abständen (a, b) des Befestigungsmittels (6) zu der ersten und der zweiten Stützfläche (4, 5) entspricht.

4. Sammelschienenadapter nach einem der vorangegangenen Ansprüche, **dadurch gekennzeichnet, dass** das Befestigungsmittel (6) entlang einer sich im Wesentlichen parallel zu zumindest einer Stützfläche (4, 5) erstreckenden Achse eine konstante Geometrie aufweist, die ausgestaltet ist, um einen Formschluss mit dem Sammelschienenadapter herzustellen.

5. Sammelschienenadapter nach Anspruch 4, **dadurch gekennzeichnet, dass** das Befestigungsmittel (6) an einer Fläche (7) des Fußteils (3) vorliegt, die mit einer Fläche (8) des Sammelschienenadapters formschlüssig in Kontakt steht, wenn das Fußteil (3) mittels des Befestigungsmittels (6) mit dem Sammelschienenadapter verbunden ist.

6. Sammelschienenadapter nach einem der vorangegangenen Ansprüche, **dadurch gekennzeichnet, dass** das Hakenteil (1) einer elektrisch leitenden Kontaktschiene (9) beigeordnet ist, die von dem Fußteil (3) überragt wird und die in eine Auflagefläche (10) des Sammelschienenadapters eingelassen ist, wobei bei eingesetzter Sammelschiene die Sammelschiene zwischen einer Stützfläche (4, 5) des Fußteils (3) und der Auflagefläche (10) formschlüssig aufgenommen wird.

7. Sammelschienenadapter nach Anspruch 6, **dadurch gekennzeichnet, dass** die Kontaktschiene (9) zumindest abschnittsweise elastisch ausgebildet ist und in den Freiraum (2) hineinragt, wenn in ihn keine Sammelschiene eingesetzt ist.

## Claims

1. Busbar adapter, with at least one hook part (1), which is configured such as to engage behind a busbar and delimit a free space (2), which in one spatial direction comprises a dimension of the busbars, wherein the hook part (1) comprises a foot part, which comprises a first and a second support surface (4, 5), and wherein the foot part (3) is optionally aligned in such a way that, in the said spatial direction, either the first or the second support surface (4, 5) delimit the free space (2),
**characterized in that**
the foot part (3) is a separate component part, which is connected by means of detachable securing means (6) to the busbar adapter, wherein the securing means (6) exhibit a first spacing interval (a) to the first support surface (4), which differs from a second spacing interval (b) of the securing means (6) to the second support surface (5).

2. Busbar adapter according to claim 1, **characterized in that** the foot part (3) comprises an essentially right parallelepiped-shaped body, with which the support surfaces (4, 5) are formed on opposing side surfaces.

3. Busbar adapter according to claim 1, **characterized in that** the first and the second support surfaces (4, 5) are formed as parallel surfaces, which are aligned perpendicular to the said spatial direction and are spaced at a distance from one another along the said spatial direction by a length amount which corresponds to the sum total of the spacing intervals (a, b) of the securing means (6) to the first and the second support surface (4, 5).

4. Busbar adapter according to one of the preceding claims, **characterized in that** the securing means, **characterized in that** the securing means (6) exhibit a constant geometry along an axis extending essentially parallel to at least one support surface (4, 5), which is configured such as to form a positive fit connection with the busbar adapter.

5. Busbar adapter according to claim 4, **characterized in that** the securing means (6) are located at a surface (7) of the foot part (3), which is in positivefit connection with a surface (8) of the busbar adapter when the foot part (3) is connected by means of the securing means (6) to the busbar adapter.

6. Busbar adapter according to one of the preceding claims, **characterized in that** the hook part (1) is assigned to an electrically conductive contact rail (9), over which the foot part (3) projects and which is let into a contact surface (10) of the busbar adapter, wherein, with the busbar in place, the busbar is accommodated in positive fit connection between a support surface (4, 5) of the foot part (3) and the contact surface (10).

7. Busbar adapter according to claim 6, **characterized in that** the contact rail (9) is configured as elastic at least in sections, and projects into the free space (2) when no busbar is inserted into it.

## Revendications

1. Adaptateur pour barres omnibus, comportant au moins un élément formant crochet (1) qui est configuré pour enserrer par l'arrière une barre omnibus et pour délimiter un dégagement (2) qui présente une dimension de la barre omnibus dans une direction dans l'espace, ledit élément formant crochet (1) entourant un pied qui comporte une première et une deuxième surface d'appui (4, 5), et ledit pied (3) étant orienté au choix de telle sorte que dans ladite direction dans l'espace, soit la première, soit la deuxième surface d'appui (4, 5) délimite le dégagement (2), **caractérisé en ce que**
le pied (3) est un élément séparé qui est relié à l'adaptateur pour barres omnibus par un moyen de fixation (6) amovible, ledit moyen de fixation (6) étant situé par rapport à la première surface d'appui (4) à une première distance (a) qui diffère d'une deuxième distance (b) entre le moyen de fixation (6) et la deuxième surface d'appui (5).

2. Adaptateur pour barres omnibus selon la revendication 1, **caractérisé en ce que** le pied (3) comporte un corps sensiblement parallélépipédique, dans lequel les surfaces d'appui (4, 5) sont réalisées sur des surfaces latérales opposées.

3. Adaptateur pour barres omnibus selon la revendication 1, **caractérisé en ce que** la première et la deuxième surface d'appui (4, 5) sont réalisées sous forme de surfaces parallèles qui sont orientées perpendiculairement à ladite direction dans l'espace et sont écartées l'une de l'autre le long de ladite direction dans l'espace sur une longueur qui correspond à la somme des distances (a, b) du moyen de fixation (6) par rapport à la première et à la deuxième surface d'appui (4, 5).

4. Adaptateur pour barres omnibus selon l'une quelconque des revendications précédentes, **caractérisé en ce que** le moyen de fixation (6), le long d'un axe s'étendant sensiblement parallèlement à au moins une surface d'appui (4, 5), présente une géométrie constante qui est configurée pour établir un assemblage par conjugaison de forme avec l'adaptateur pour barres omnibus.

5. Adaptateur pour barres omnibus selon la revendication 4, **caractérisé en ce que** le moyen de fixation (6) est situé sur une surface (7) du pied (3), laquelle est en contact par conjugaison de forme avec une surface (8) de l'adaptateur pour barres omnibus lorsque le pied (3) est relié à l'adaptateur pour barres omnibus par l'intermédiaire du moyen de fixation (6).

6. Adaptateur pour barres omnibus selon l'une quelconque des revendications précédentes, **caractérisé en ce que** l'élément formant crochet (1) est associé à un rail de contact (9) électroconducteur, au-delà duquel s'avance le pied (3) et lequel est inséré dans une surface de pose (10) de l'adaptateur pour barres omnibus, la barre omnibus étant reçue par conjugaison de forme entre une surface d'appui (4, 5) du pied (3) et la surface de pose (10) lorsque la barre omnibus est mise en place.

7. Adaptateur pour barres omnibus selon la revendication 6, **caractérisé en ce que** le rail de contact (9) est réalisé au moins par zones sous forme élastique et s'engage dans le dégagement (2) lorsque aucune barre omnibus n'est insérée dans ledit rail.
